# EUROPEAN PATENT APPLICATION

(11) **EP 2 477 394 A1**
(43) Date of publication of application: **18.07.2012**
(21) Application number: 12150691.9
(22) Date of filing: 11.01.2012
(51) Int. Cl.: H04N 5/76, H04N 21/236, H04N 21/434

(54) **Broadcast recording device and broadcast recording method**

(30) Priority: 12.01.2011 JP 2011003658
(71) Applicant: Funai Electric Co., Ltd., Daito-shi, Osaka (JP)
(72) Inventor: Date, Makoto, Daito-shi, Osaka (JP)
(74) Representative: Grünecker, Kinkeldey, Stockmair & Schwanhäusser

(57) **Abstract**

The present invention discloses a broadcast recording device that generates a partial transport stream from a transport stream representing information of one or more channels as a transport packet group. The device includes a reduction recording unit that generates the partial transport stream by using a filtered transport packet group made by deleting at least one of a caption transport packet and a data broadcast transport packet from the transport packet group representing the information of one recording channel selected from the one or more channels. The reduction recording unit records the generated partial transport stream in a recording media.

## Description

### BACKGROUND OF THE INVENTION

### 1. Field of the Invention:

The present invention relates to a broadcast recording device and a broadcast recording method for generating a partial transport stream from a transport stream representing information of one or more channels as a transport packet group.

### 2. Description of the Related Art:

For example, information of plural channels is included in a transport stream (hereafter also mentioned as TS) of a digital broadcasting. When the information of the TS is recorded in a hard disk, a Blue-ray disc or other recording devices, according to the operational standards, the information of the TS is reduced to a partial TS (partial transport stream) to include the information of only one channel. ARIB STD-B21 and ARIB TR-B 15 5 are one of standards of BS (Broadcasting Satellite) digital broadcasting in Japan. EN300 468 is one of standards of digital broadcasting in Europe. EIA/CEA-775.2 is one of standards of digital broadcasting in North America.

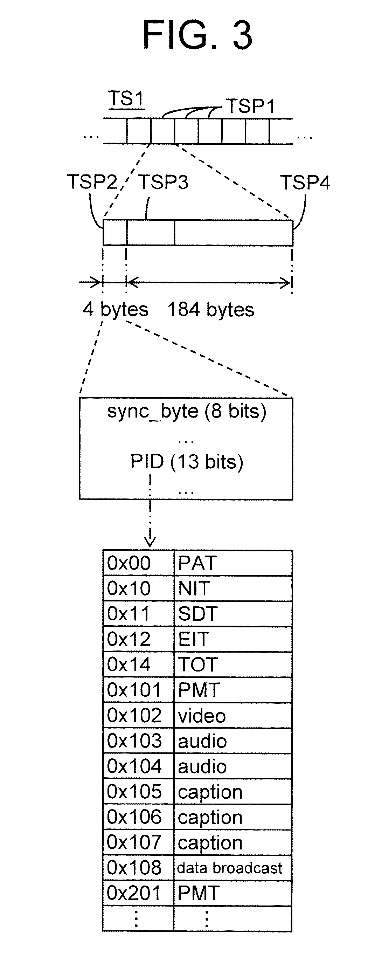

Japanese Patent Application Publication No. 2006-352721, Japanese Patent Application Publication No. 2006-014225, Japanese Patent Application Publication No. 2005-160040, and Japanese Patent Application Publication No. 2002-010182 disclose techniques to generate the partial TS from the TS according to the above operational standards. The partial TS includes the information of one channel concerning video, audio, caption, data broadcast, and other information. For example, Japanese Patent Application Publication No. 2006-352721 discloses an embodiment how to generate an output stream from an input stream in Fig. 3 and paragraph 0018. The input stream includes TS packets (transport packets) of three channels. The TS packet group for each channel may include video TS packets, audio TS packets, caption TS packets and data broadcast TS packets. The video TS packets are indicated as V1, V2 and V3. Therefore, the output stream includes the TS packets of one channel such as the video TS packet indicated as V1. Japanese Patent Application Publication No. 2006-352721 discloses that the output stream includes data broadcast TS packets in paragraph 0018.
The data capacity of the recording media to record the partial TS is limited. Therefore, it is convenient if the amount of recording data could be reduced.

### BRIEF SUMMARY OF THE INVENTION

The present invention discloses that a convenience of a broadcast recording device is improved.

One aspect of the present invention provides a broadcast recording device that generates a partial transport stream from a transport stream representing information of one or more channels as a transport packet group, the device comprising:
a reduction recording unit that generates the partial transport stream by using a filtered transport packet group made by deleting at least one of a caption transport packet and a data broadcast transport packet from the transport packet group representing the information of one recording channel selected from the one or more channels, and then records the generated partial transport stream in a recording media.
Another aspect of the present invention provides a broadcast recording method that generates a partial transport stream from a transport stream representing information of one or more channels as a transport packet group, the method comprising:
generating the partial transport stream by using a filtered transport packet group made by deleting at least one of a caption transport packet and a data broadcast transport packet from the transport packet group representing information of one recording channel selected from the one or more channels; and
recording the generated partial transport stream in a recording media.

These and other features, aspects, and advantages of the invention will be apparent to those skilled in the art from the following detailed description of preferred non-limiting exemplary embodiments, taken together with the drawings and the claims that follow.

### BRIEF DESCRIPTION OF THE DRAWINGS

It is to be understood that the drawings are to be used for the purposes of exemplary illustration only and not as a definition of the limits of the invention. Throughout the disclosure, the word "exemplary" is used exclusively to mean "serving as an example, instance, or illustration." Any embodiment described as "exemplary" is not necessarily to be construed as preferred or advantageous over other embodiments.
Fig. 1 is an exemplary illustration of a block diagram showing a circuit configuration of a recording/playback device (broadcast recording device) 1 according to one embodiment.
Fig. 2 is an exemplary illustration of a front view showing an external appearance of an operation input unit 20.
Fig. 3 is an exemplary illustration of a schematic diagram showing a structure of a transport stream TS1.
Fig. 4 is an exemplary illustration of a schematic diagram showing a configuration of a partial transport stream TS2 generated in a normal recording mode.
Fig. 5 is an exemplary illustration of a schematic diagram showing a configuration of partial transport stream TS3 generated in a reduction recording mode.
Fig. 6 is an exemplary illustration of a flow chart showing a process to select a recording mode executed in the recording/playback device 1.
Fig. 7 is an exemplary illustration of a flow chart showing a normal recording process executed in the recording/playback device 1.
Fig. 8 is an exemplary illustration of a flow chart showing a reduction recording process executed in the recording/playback device 1.
Fig. 9 is an exemplary illustration of a schematic diagram showing a configuration of the partial transport stream TS3 generated in the reduction recording mode according to a variation example.
Fig. 10 is an exemplary illustration of a schematic diagram showing a configuration of various partial transport streams TS3 generated in the reduction recording mode according to a variation example.

### DETAILED DESCRIPTION OF THE INVENTION

The detailed description set forth below in connection with the appended drawings is intended as a description of presently preferred embodiments of the invention and is not intended to represent the only forms in which the present invention may be constructed and or utilized.
An embodiment of the present invention will be described below. It goes without saying that the below-described embodiment merely exemplifies the present invention.

### (First Aspect)

One aspect provides a broadcast recording device that generates a partial transport stream from a transport stream (TS1) representing information of one or more channels as a transport packet group, the device comprising:
a reduction recording unit (U3) that generates the partial transport stream (TS3) by using a filtered transport packet group (GP2) made by deleting at least one of a caption transport packet (C1) and a data broadcast transport packet (D1) from the transport packet group representing the information of one recording channel selected from the one or more channels, and then records the generated partial transport stream (TS3) in a recording media (M1).
According to the first aspect, a convenient broadcast recording device can be provided.

### (Second Aspect)

An optional aspect provides the broadcast recording device, further comprising:
a mode selection unit (U1) that receives a selecting result of a recording mode including a normal recording mode in which a target transport packet is not deleted and a reduction recording mode in which the target transport packet is deleted; and
a normal recording unit (U2) that generates the partial transport stream by using the transport packet group representing the information of one recording channel selected from the one ore more channels when the normal recording mode is selected, and then records the generated partial transport stream in the recording media, wherein:
   the target transport packet represents at least one of the caption transport packet and the data broadcast transport packet, and
the reduction recording unit (U3) generates the partial transport stream by using the filtered transport packet group when the reduction recording mode is selected, and then records the generated partial transport stream in the recording media.
According to the second aspect, a convenient broadcast recording device can be provided.

### (Third Aspect)

Another optional aspect provides the broadcast recording device, wherein:
when plural audio transport packets which have different packet identifiers are included in the transport packet group representing the information of the recording channel, the reduction recording unit (U3) generates the partial transport stream by using the filtered transport packet group made by deleting the audio transport packets which have other packet identifiers than a certain packet identifier, and then records the generated partial transport stream in the recording media.
According to the third aspect, the data amount of the partial transport stream can be further reduced.

### (Fourth Aspect)

Another optional aspect provides the broadcast recording device, wherein:
when plural video transport packets which have different packet identifiers are included in the transport packet group representing the information of the recording channel, the reduction recording unit (U3) generates the partial transport stream by using the filtered transport packet group made by deleting the video transport packets which have other packet identifiers than a certain packet identifier, and records then the generated partial transport stream in the recording media.
According to the fourth aspect, the data amount of the partial transport stream can be further reduced.

### (Fifth Aspect)

Another aspect provides a broadcast recording method that generates a partial transport stream from a transport stream representing information of one or more channels as a transport packet group, the method comprising:
generating the partial transport stream by using a filtered transport packet group made by deleting at least one of a caption transport packet and a data broadcast transport packet from the transport packet group representing information of one recording channel selected from the one or more channels; and
recording the generated partial transport stream in a recording media.
According to the fifth aspect, a broadcast recording device can be more convenient.

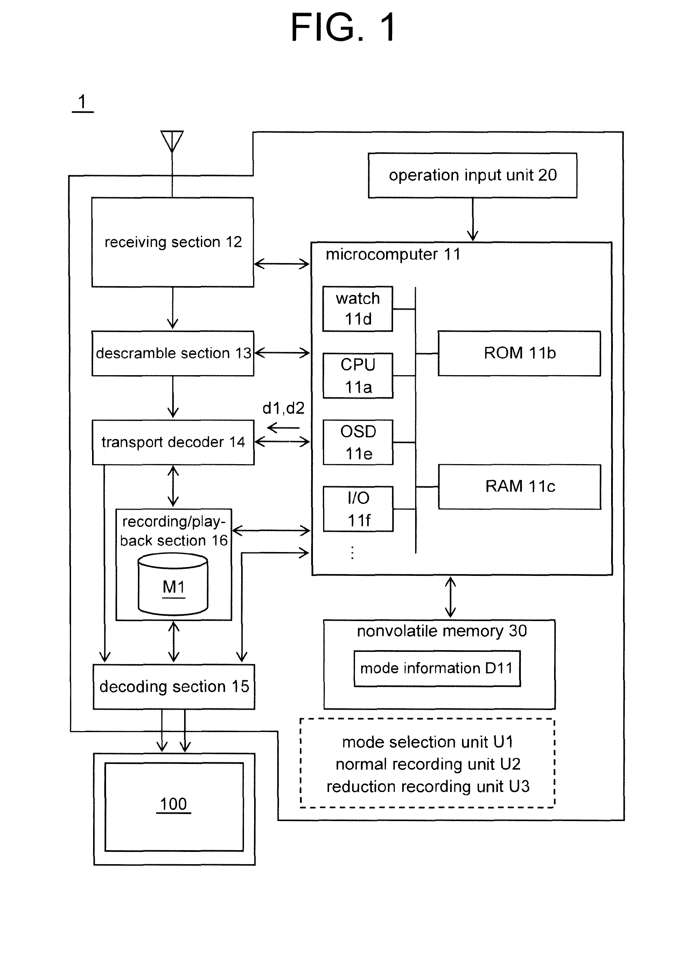

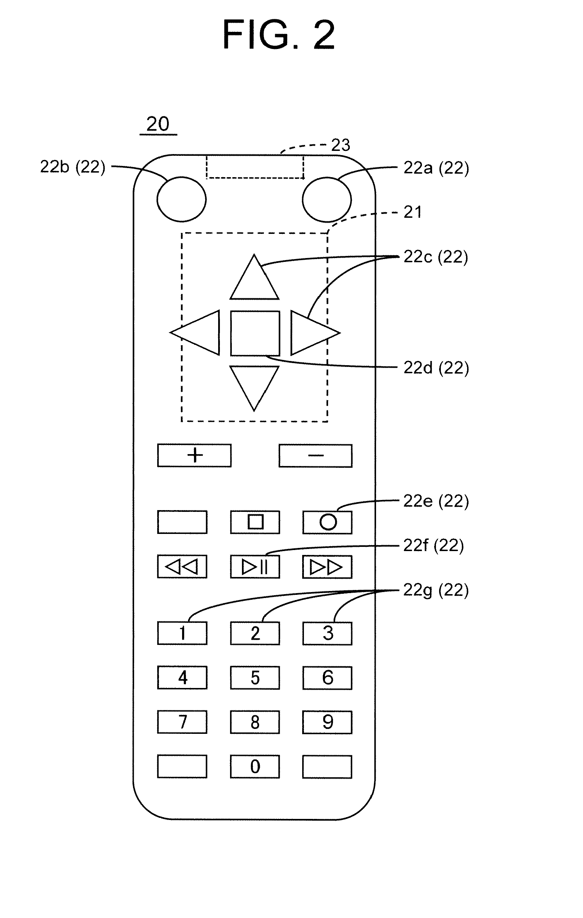

(1) Main structure of the broadcast recording device:
The broadcast recording device (1) exemplary shown in Fig. 1 generates a partial TS (partial transport stream) from a transport stream TS1 indicated as a TS packet group (transport packet group) representing information of one or more channels, and records the partial TS in the recording media M1. Hereafter, Figs. 2 to 8 are also referred to.

The broadcast recording device (1) can be any devices that record broadcasting such as the recording/playback device 1 exemplary shown in Fig. 1 and a television with a recording device. The television broadcasting includes terrestrial digital broadcasting, BS (Broadcasting Satellite) broadcasting and CS (Communication Satellite) broadcasting.
The recording/playback device includes a hard disk recorder/player, a BD (Blue-ray Disc) recorder/player, a DVD (Digital Versatile Disc) recorder/player, a video cassette recorder/player, a television with recorder/player, and a combination of these devices.

The broadcast recording device (1) exemplary shown in FIg.1 has a reduction recording unit U3 that generates a partial transport stream TS3 by using a filtered TS packet group (filtered transport packet group) GP2 made by deleting at least one of a caption TS packet (caption transport packet) C1 and a data broadcast TS packet (data broadcast transport packet) D1 from a TS packet group GP1 representing the information of one recording channel (Ch. 1) selected from one or more channels (Ch. 1 to 3), and then records the generated partial transport stream TS3 in the recording media M1.

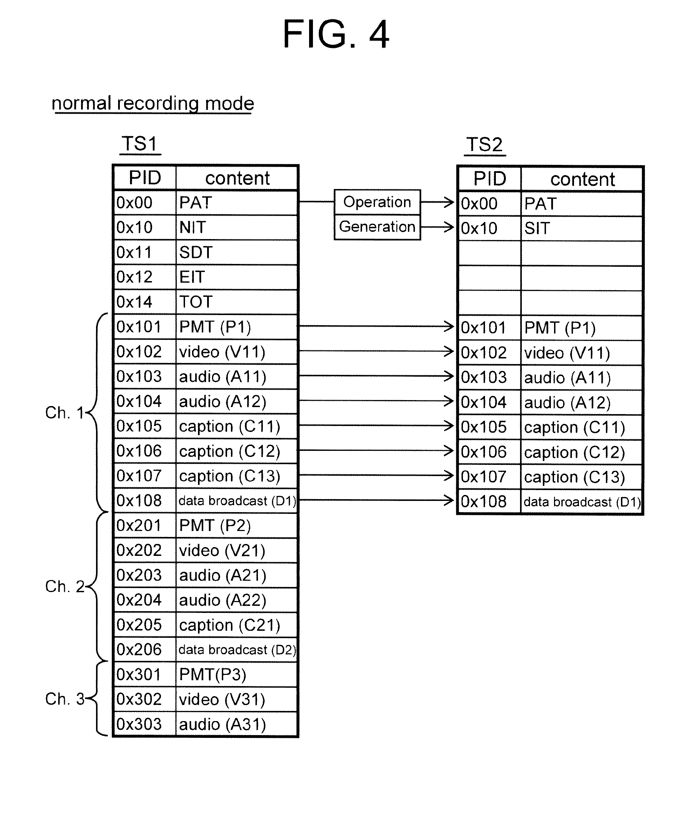

As exemplary shown as the partial transport stream TS2 in Fig.4, a conventional partial TS includes information of one channel concerning video, audio, caption, data broadcast, and other information. The broadcast recording device in the present invention deletes at least one of the caption TS packet (C1) and the data broadcast TS packet (D1) from the information of one channel. As explained above, the amount of data recorded in the partial TS is reduced, and thus the broadcast recording device in the present invention can be convenient.

The broadcast recording device (1) in the present invention also has a mode selection unit U1, a normal recording unit U2 and a reduction recording unit U3. The mode selection unit U1 receives a selecting result of a recording mode including a normal recording mode (91 a) in which a target TS packet (target transport packet) is not deleted, and a reduction recording mode (91b) in which the target TS packet is deleted. Here, the target TS packet represents at least one of the caption TS packet (C1) and the data broadcast TS packet (D1). When the normal recording mode (91a) is selected, the normal recording unit U2 generates the partial transport stream TS2 by using the TS packet group GP1 representing the information of one recording channel (Ch. 1) selected from one or more channels (Ch. 1 to 3), and then records the partial transport stream TS2 in the recording media M1. When the reduction recording mode (91b) is selected, the reduction recording unit U3 generates the partial transport stream TS3 by using the TS packet group GP2 made by deleting the target TS packets from the TS packet group GP1 representing the information of one recording channel (Ch. 1) selected from one or more channels (Ch. 1 to 3), and then records the generated partial transport stream TS3 in the recording media M1.

In the reduction recording mode (91 b), at least one of the caption TS packet (C1) and the data broadcast TS packet (D1) is deleted from the information of one channel. Consequently, the amount of data recorded in the partial TS can be reduced. Therefore, the broadcast recording device in the present invention is convenient.
Here, the recording mode can include other modes than the normal recording mode and the reduction recording mode.

If plural audio TS packets (audio transport packets A11, A12) which have different packet identifiers PID are included in the TS packet group GP 1 representing the information of one recording channel (Ch. 1), the reduction recording unit U3 can generate the partial transport stream TS3 by using the filtered TS packet group GP2 made by deleting the audio TS packet (A12) that has other packet identifier than a certain packet identifier from the TS packet group GP1, and then record the partial transport stream TS3 in the recording media M1. Consequently, the audio TS packet (A12) is further deleted from the information of one channel. Therefore, the amount of data recorded in the partial TS can be further reduced.

If plural video TS packets (video transport packets V11, V12) which have different packet identifiers PID are included in the TS packet group GP1 representing the information of recording channel (Ch. 1), the reduction recording unit U3 can generate the partial transport stream TS3 by using the filtered TS packet group GP2 made by deleting the video TS packet (V 12) that has other packet identifier than a certain packet identifier from the TS packet group GP1, and then record the partial transport stream TS3 in the recording media M1. Consequently, the video TS packet (V12) is further deleted from the information of one channel. Therefore, the amount of data recorded in the partial TS can be further reduced.

Further, by using the broadcast recording method corresponding to the reduction recording unit U3, comprising a mode selection step corresponding to the mode selection unit U1, a normal recording step corresponding to the normal recording unit U2, and a reduction recording step corresponding to the reduction recording unit U3, the amount of data recorded in the partial TS can be reduced. Therefore, it can make broadcast recording devices more convenient.

In addition, the mode selection unit U1 can display the recording mode selection screen (91) to receive the selecting result of the recording mode including the normal recording mode (91a) or the reduction recording mode (91b). In the normal recording mode (91a), both of the caption TS packet (C1) and the data broadcast TS packet (D1) are not deleted. In the reduction recording mode (91b), both of the caption TS packet (C1) and the data broadcast TS packet (D1) are deleted, and further the video transport packets (V11, V12) and the audio transport packets (A11, A12) which have other packet identifiers than a certain packet identifier are deleted to leave only one video TS packet (V11) and one audio TS packet (A 11).
When the normal recording mode (91 a) is selected, the normal recording unit U2 can generate the partial transport stream TS3 by selecting and using the TS packet group GP1 from the transport stream TS1 to include the information of one recording channel (Ch. 1) selected from multiple channels (Ch. 1 to 3), and then the generated partial transport stream TS3 can be recorded in the recording media M1.
When the reduction recording mode (91b) is selected, the reduction recording unit U3 can generate the partial transport stream TS2 by selecting and using the filtered TS packet group GP2 and record the generated partial transport stream TS2 in the recording media M1. Here, the filtered TS packet group GP2 is made by deleting both of the caption TS packet (C1) and the data broadcast TS packet (D1) from the TS packet group GP1 representing the information of one recording channel (Ch. 1) selected from one or more channels (Ch. 1 to 3), and further deleting the video transport packets (V11, V12) and the audio transport packets (A11, A12) which have other packet identifiers than a certain packet identifier to leave only one video TS packet (V11) and one audio TS packet (A11).

Here, the above displaying process can be a process to display the screen on the devices themselves or a process to display the screen on the external devices.

(2) Configuration of broadcast recording device:
The recording/playback device (broadcast recording device) 1 exemplary shown in Fig. 1 has a microcomputer 11, a receiving section 12, a descramble section 13, a transport decoder 14, a decoding section 15, a recording/playback section 16, an operation input unit 20, a nonvolatile memory 30 and other sections. The each section is connected respectively to enable input and output of information.

The receiving section 12 is composed of a tuner or the like to reproduce the TS (transport stream) by receiving the digital television broadcasting signal, demodulating it, correcting errors, and processing any other operations. The TS is made by multiplexing plural streams of video, audio and other information at the sender's multiplexer (MUX). For example, in case the synthesizer system is adopted for the tuner, when PLL (Phase Lock Loop) data is input from the microcomputer 11, the receiving section 12 extracts intermediate frequency (IF) signal from television broadcasting signal input from an antenna. The signal of the IF corresponds to the PLL data that is based on a dividing ratio of a variable frequency dividing circuit.

The descramble section 13 descrambles the TS that is reproduced by the receiving section 12 based on the key information recorded in a CAS (Conditional Access System) card or the like. Fig. 3 exemplary shows a schematic structure of the transport stream TS1 generated by the descramble section 13.
If the TS reproduced by the receiving section 12 is not scrambled, there is no need for the broadcast recording device to be provided with the descramble section.

MPEG (Moving Picture Experts Group) 2 or other MPEG formats are used for the TS data format. The transport stream TS1 shown in Fig. 3 has a signal line in which TS packets (transport packets) TSP1 of fixed-length 188 bytes continue. The TS packet TSP1 includes a header TSP2 and a payload TSP4, and may include an adaptation field TSP3. The header TSP2 is 4 bytes in length and has a synchronization byte that is 8 bits in length and a PID (packet identifier) that is 13 bits in length. The types of TS packet can be identified based on the value of the PID. The payload TSP4 holds the information concerning videos, audio, data broadcast and other information to be transferred by the TS packets. The adaptation field TSP3 holds additional information such as the current time. The adaptation field TSP 3 may not be provided in some devices.

According to the instruction from the microcomputer 11, the transport decoder 14 filters transport stream TS1 in which plural streams are multiplexed and generates the partial TS by extracting coded video data, coded audio data and other data of the designated program. Further, the transport decoder 14 makes a SIT (Selection Information Table) based on the information of the extracted program and multiplexes it to the partial TS.

In the settings of the normal recording mode, as exemplary shown in Fig. 4, the recording/playback device 1 inputs an instruction from the microcomputer 11 and holds it in an internal memory to extract all packets of the recording channel (e.g. Ch. 1) and to delete packets of other channels (e.g. Ch. 2 and 3). The transport stream TS1 shown in Fig. 4 includes packets of PAT (Program Association Table), NIT (Network Information Table), SDT (Service Description Table), EIT (Event Information Table), TOT (Time Offset Table), PMT (Program Map Table) of each channel, video packets of each channel (V11, V21, V31), audio packets of each channels (A11, A12, A21, A22, A31), caption packets of each channel (C11, C12, C13, C21) and data broadcast packets of each channel (D1, D2). The reference letter C1 is used as a collective term to include all caption TS packets in Ch. 1. The reference letters P1, P2 and P3 are used for the PMT of each channel.

Here, only one PAT can be included in the TS. The PAT can include a list of the PID that is stored in the PMT of the TS.
The NIT includes the information concerning network transmission and service identifiers concerning the service format.
The SDT includes the program information name of the service provided by the TS and other information.
The EIT includes the information corresponding to the programs such as program names, on air date/time, and contents of the broadcasting. The EIT is used for making EPG.
The TOT includes the current date/time and the information about summer time.
The PMT stores the PID of the video packets, audio packets, caption packets, data broadcast packets and other packets of each channel.
The SIT is used for instructing the information concerning the service transferred as the partial TS.

In the normal recording mode, the NIT, the SDT, the EIT, the TOT and packets for other channels (Ch. 2 and 3) than the recording channel are deleted from the transport stream TS1, the PAT is rewritten, and the SIT is generated.

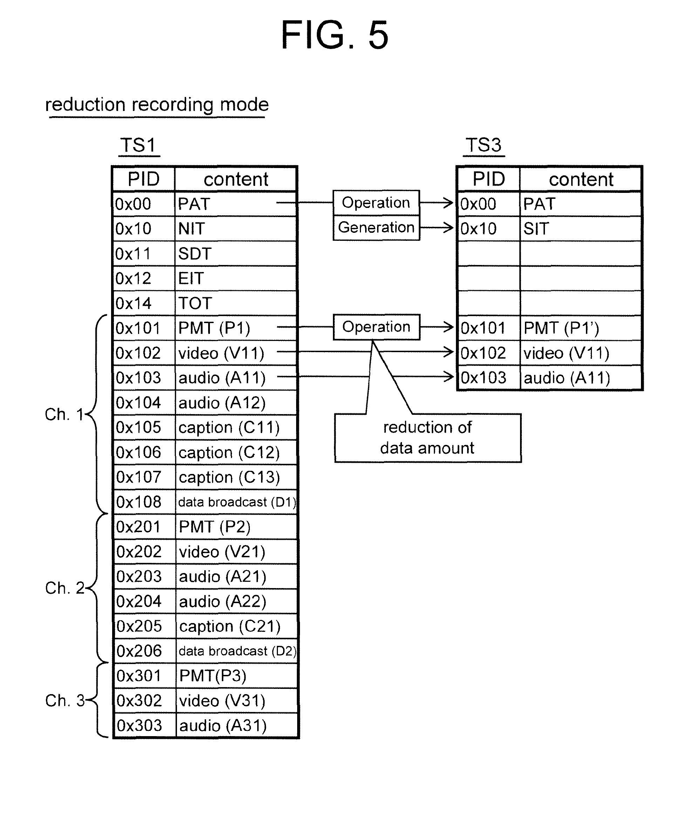

In the settings of the reduction recording mode, as exemplary shown in Fig. 5, the recording/playback device 1 inputs an instruction from the microcomputer 11 and holds it in the internal memory to extract the video TS packet that has a certain PID (e.g. V11) and the audio TS packets that has a certain PID (e.g. A11) in the recording channel (e.g. Ch. 1), and to delete the caption TS packets (e.g. C11, C12 , C13), the data broadcast TS packet (e.g. D1) and packets for other channels (e.g. Ch. 2 and 3) than the recording channel.
In the reduction recording mode, the NIT, the SDT, the EIT, the TOT, the caption TS packets (C11, C12, C13) and data broadcast TS packet (D1) of the recording channel, and packets for other channels (Ch. 2 and 3) than the recording channel are deleted from the transport stream TS1, the PMT and the PAT is rewritten, and the SIT is generated. The reference letter P1' is used for the PMT of the TS3.

The decoding section 15 decodes the coded video data, the coded audio data and other coded data in the partial transport stream TS2 and TS3, and generates video signals for display, audio signals for audio output and other signals. The generated video signals are output to an external display device such as the display device 100 from a video output connector or the like. The generated audio signals are output to an external audio output device (including the display device 100) from an audio output connector or the like.

The recording/playback section 16 is composed of a hard disk drive for example, writes the partial TS generated by the transport decoder 14 in the recording media M1, and reads out the partial TS from the recording media M1. Here, in the normal recording mode, the partial transport stream TS2 exemplary shown in Fig. 4 is recorded. In the reduction recording mode, the partial transport stream TS3 exemplary shown in Fig. 5 is recorded.

The operation input unit 20 is composed of a remote controller as exemplary shown in Fig. 2, and receives the input of user operations. The remote controller has a remote controller control section 21, operation keys 22, an infrared transmitter/receiver section 23, and so on. The operation keys 22 includes a power key 22a, a menu key 22b, cursor keys 22c, an enter key 22d, a recording key 22e, a playback key 22f, number keys 22g, and so on.

The nonvolatile memory 30 is composed of a rewritable nonvolatile semiconductor memory such as flash memory and EEPROM (Electrically Erasable and Programmable Read Only Memory). The nonvolatile memory 30 stores the selected mode information D11 and other information. The nonvolatile memory 30 can be a magnetic disk such as a hard disk.

The microcomputer 11 has a CPU (Central Processing Unit) 11 a that is connected to an internal bus, semiconductor memories (11b, 11c), a watch circuit 11d, an OSD (On-Screen Display) circuit 11e, an I/O (Input/Output) circuit 11f, and so on. The CPU 11a controls entire operation of the recording/playback device 1 by using a RAM (Random Access Memory) 11c as a working area and executing the control programs for the recording/playback device written in a ROM (Read Only Memory) 11b. In the ROM 11b, the program that enables the recording/playback device 1 to serve as the mode selection unit U1 is written, for example. The watch circuit 11d keeps the current time and can output it to the CPU 1 by generating interrupt signals at constant time intervals. The OSD circuit 11e generates superimposed signals of OSD screens, and outputs them to the decoding section 15.

The TS of the digital broadcasting includes the information of plural channels as exemplary shown as the TS1 in Fig. 4. When recording the information of the TS in the hard disk or the like, according to the operational standards, the TS information is reduced to the partial TS to include the information of only one channel. Further, plural streams concerning audio, video, caption, data broadcast and other information are included in the one channel. However, in the most of the situations when users watch programs, it is enough if main video and audio are included.

Accordingly, as an embodiment of the present invention, the broadcast recording device reduces the amount of data by converting the TS to the partial TS that has the minimum information including only one video and one audio and then recording them to the hard disk or the like. In order to reduce the amount of recording data than the normal recording mode in which the information of one channel selected from the TS concerning video, audio, caption and data broadcast are recorded, the reduction recording mode is specified to record the information of only one video and one audio. By setting the reduction recording mode in which the information of extra video, audio, caption and data broadcast are not recorded, the amount of recording data can be reduced.

In other words, the broadcast recording device in the present invention generates the partial transport stream TS3 by using the filtered TS packet group (GP2) made by deleting at least one of the caption TS packet (C1) and the data broadcast TS packet (D1) from the TS packet group (GP1) representing the information of one recording channel (e.g. Ch. 1) selected from one or more channels (e.g. Ch. 1 to 3), and then records the partial transport stream TS3 in the recording media M1.

Further, as an embodiment of the present invention, the broadcast recording device records the partial TS as follows.
First, when recording the TS, the prior video and audio streams specified in the current settings of the broadcast recording device are selected from the video and audio streams which are included in the PMT and indicated by the PID. The recording streams are reduced to include only one video and one audio by reflecting only the PID of the selected streams to the filter (transport decoder 14) for making the TS. Further, concerning the section data to be recorded simultaneously, the PAT is recorded, same as the normal partializing process, by deleting the information of other channels than the one channel, and the PMT is recorded by deleting the information related to the streams which are not recorded. Concerning the other information (e.g. SIT), the data is recorded by deleting the information related to the streams which are not recorded.

In other words, the broadcast recording method in the present invention generates the partial transport stream TS3 by using the filtered TS packet group (GP2) made by deleting at least one of the caption TS packet (C1) and the data broadcast TS packet (D1) from the TS packet group (GP1) representing the information of one recording channel (e.g. Ch. 1) selected from one or more channels (e.g. Ch. 1 to 3), and then records the partial transport stream TS3 in the recording media M1.

(3) Operation, action and effect of the broadcast recording device:
Next, operation, action and effect of the broadcast recording device (1) are explained as follows.

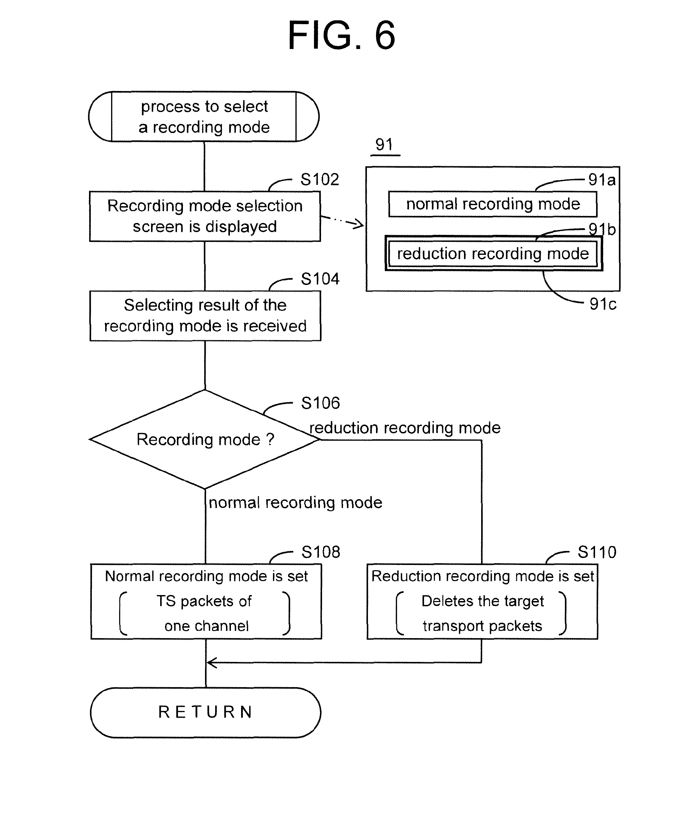

Fig. 6 exemplary shows a flowchart of the process to select the recording mode executed in the recording/playback device (1). The process is done by the microcomputer 11. For example, the process is started by pressing the menu key 22b to display the menu screen, selecting the recording mode by the cursor keys 22c, and pressing the enter key 22d. The process is done in parallel with other processes by multitasking. Here, steps S 102 to S104 correspond to the mode selection unit U1, step S108 corresponds to the normal recording unit U2, and step S110 corresponds to the reduction recording unit U3. In the following explanations, the word "step" is omitted.

When the process to select the recording mode is started, the broadcast recording device (1) displays the recording mode selection screen 91 as shown in Fig. 6 (S102). If the broadcast recording device is such device as a recording/playback device without a display function, the OSD circuit 11e sends OSD signals to the external display device 100 to display the recording mode selection screen 91 on the external display device 100, for example. If the broadcast recording device is such device as a display device with a recording function, the OSD circuit 11e can send OSD signals to the display section of the device itself to display the recording mode selection screen 91 on the display section, for example. On the recording mode selection screen 91, items of the recording mode such as the normal recording mode 91a and the reduction recording mode 91b are displayed, and the cursor 91c is placed on one of the recording mode. In other words, the recording mode selection screen 91 is the screen to select the recording mode including the normal recording mode 91a and the reduction recording mode 91b. The normal recording mode 91a is the recording mode in which both of the caption TS packets and the data broadcast TS packets in the transport stream TS1 are not deleted. The reduction recording mode 91b is the recording mode in which both of the caption TS packets and the broadcast TS packets are deleted, and video TS packets and audio TS packets which have other packet identifiers than a certain packet identifier are deleted to leave only one audio TS packet and one video TS packet. The cursor 91c can be moved to the lower recording mode by pressing the down key of the cursor keys 22c, and can be moved to the upper recording mode by pressing the up key of the cursor keys 22c.

In S 104, a selecting result of the recording mode displayed on the recording mode selection screen 91 is received. The process above is to receive the operation of cursor keys 22c for selecting the item on the recording mode selection screen 91 and the operation of the enter key 22d, for example. In S106, the process is divided according to the received recording mode.

When the normal recording mode 91a is selected, the microcomputer I sets the normal recording mode (S108) and then finish the process of recording mode selection. For example, the microcomputer 11 sends setting information d1 to the transport decoder 14. The setting information d1 is for filtering the TS packet group TS1 to make the TS packet group GP1 representing the information of one recording channel (e.g. Ch. 1) selected from plural channels (e.g. Ch. 1 to 3). Consequently, the transport decoder 14 holds the input setting information d1 in the memory, filters TS packet stream TS1 to make the TS packet group GP to include the information of one recording channel (e.g. Ch. 1), and generates the partial transport stream TS2 by using the filtered TS packet group GP1.

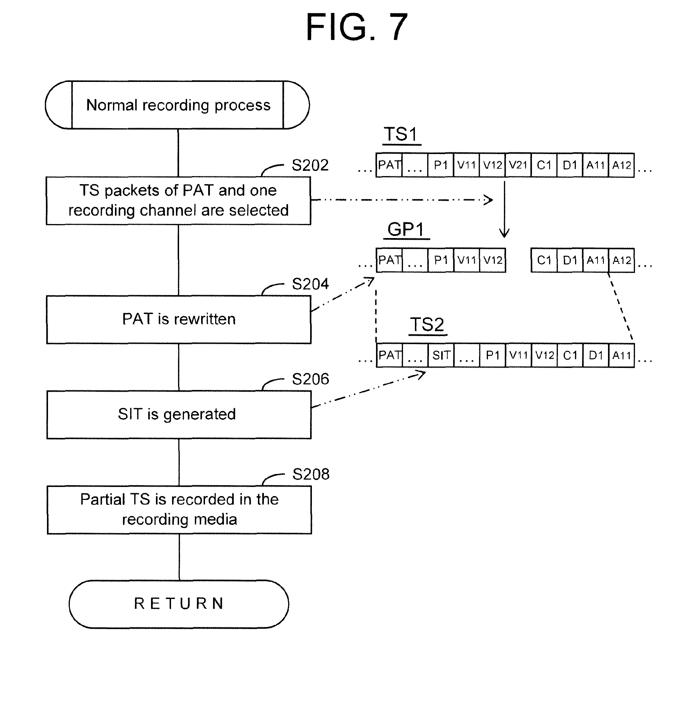

Fig. 7 exemplary shows a flowchart of the normal recording process executed in a recording/playback device (1). Here, the transport decoder 14 having the setting information d1 processes S202 to S206, and the recording/playback section 16 processes S208. The normal recording process corresponds to the normal recording unit U2, and is started when the transport stream TS1 is input.
When the normal recording process is started, transport decoder 14 selects TS packet group (GP1) including the PAT and one recording channel (e.g. Ch. 1) selected from the transport stream TS1 (S202). In the example of Fig. 4, the transport decoder 14 selects TS packets having the PID of "0x00" (PAT) and "0x101" (PMT PI) to "0x108" (data broadcast TS packet D1). Therefore, as shown in Fig. 7, the TS packets (e.g. V21) of other channels (e.g. Ch. 2 and Ch. 3) than the recording channel are removed from the transport stream TS1.

In S204, the transport decoder 14 rewrites the original PAT to comply with the partial transport stream TS2. If the original PAT includes the list of the PID concerning the PMT of Ch. 1 to Ch. 3, for example, the process can be to delete the PID concerning the PMT of Ch. 2 and Ch. 3 in order to leave only the PID concerning the PMT of Ch. 1.
The PMT can be rewritten if needed.

In S206, the transport decoder 14 extracts the information of recording program, generates the SIT based on the extracted the information of programs, and multiplexes it on the partial transport stream TS2.
In S208, the recording/playback section 16 records the generated partial transport stream TS2 in the recording media M1.

When the reduction recording mode 91a is selected, the microcomputer 11 sets the reduction recording mode (S110) and then finish the process of recording mode selection. For example, the microcomputer 11 sends setting information d2 to the transport decoder 14. The setting information d2 is for filtering the TS packet group TS1 to make the TS packet group GP2 by deleting the caption TS packet (e.g. C1) and the data broadcast TS packet (e.g. D1) from the TS packet group GP1 representing the information of one recording channel (e.g. Ch. 1) selected from plural channels (e.g. Ch. 1 to Ch. 3), and further deleting the video transport packets (e.g. V11, V12) and audio transport packets (e.g. A11, A12) which have other packet identifiers than a certain packet identifier to leave only one video TS packet and one audio TS packet. Consequently, the transport decoder 14 holds the input setting information d2 in the memory, filters TS packet stream TS 1 to make the filtered TS packet group GP2 that is selected from the information of one recording channel (e.g. Ch. 1), and generates partial transport stream TS3 by using the filtered TS packet group GP2.

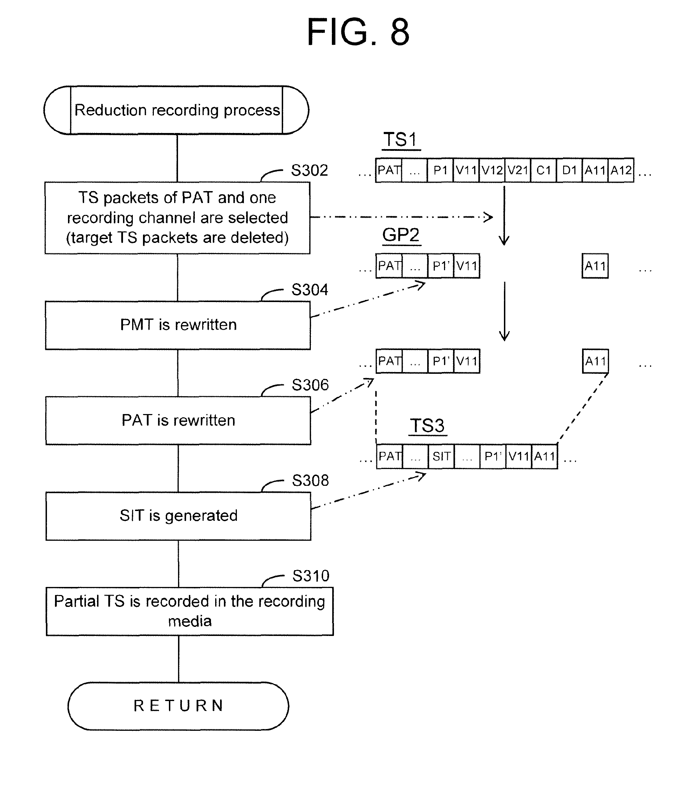

Fig. 8 exemplary shows a flowchart of the reduction recording process executed in a recording/playback device (1). Here, the transport decoder 14 having the setting information d2 processes S302 to S308, and the recording/playback section 16 processes S310. The reduction recording process corresponds to the reduction recording unit U3, and is started when the transport stream TS1 is input. When the reduction recording process is started, transport decoder 14 selects the filtered TS packet group GP2 including the PAT and one video TS packet and one audio packet (target TS packets) selected from the information of one recording channel (e.g. Ch. 1) of the transport stream TS1 (S302). In the example of Fig. 5, the transport decoder 14 selects TS packets having the PID of "0x00" (PAT), "0x101" (PMT PI), "0x 102" (video TS packet), and "0x103" (audio TS packet). Therefore, as shown in Fig. 8, not only the TS packets of other channels (e.g. Ch. 2 and Ch. 3) than the recording channel, but also audio TS packets A 12, caption TS packets C 11, C12, C13 and data broadcast TS packet D1 are removed from the transport stream TS1.

In S304, the transport decoder 14 rewrites the original PMT (PI) as the PMT (P1') to comply with the partial transport stream TS3. If the original PMT includes the list of the PID concerning the each stream of Ch. 1 (V11, A11, A12, C11, C12, C13, D1), for example, the process can be to delete the PID concerning the streams not to record (A12, C11, C12, C13, D1) in order to leave only the PID concerning the streams to record (V11, A11).
In S306, the transport decoder 14 rewrites the original PAT to comply with the partial transport stream TS3. If the original PAT includes the list of the PID concerning the PMT of Ch. I to Ch. 3, for example, the process can be to delete the PID concerning the PMT of Ch. 2 and Ch. 3 in order to leave only the PID concerning the PMT of Ch. 1.

In S308, the transport decoder 14 extracts the information of recording programs, generates the SIT based on the extracted the information of programs, and multiplexes it on the partial transport stream TS3.
In S310, the recording/playback section 16 records the generated partial transport stream TS3 in the recording media M1.

In the normal recording mode, as exemplary shown in Fig. 4, the partial transport stream TS2 recorded in the recording media M1 includes the information of one channel concerning video, audio, caption, data broadcast and other information. Meanwhile, in the reduction recording mode, the partial transport stream TS3 recorded in the recording media M1 is made by further deleting the caption TS packet C1, data broadcast TS packet D1 and the audio TS packet A12 from the information of one channel. It makes the broadcast recording device more convenient to reduce the data amount of the partial TS, because the data capacity of the recording media M1 to record the partial TS is limited.

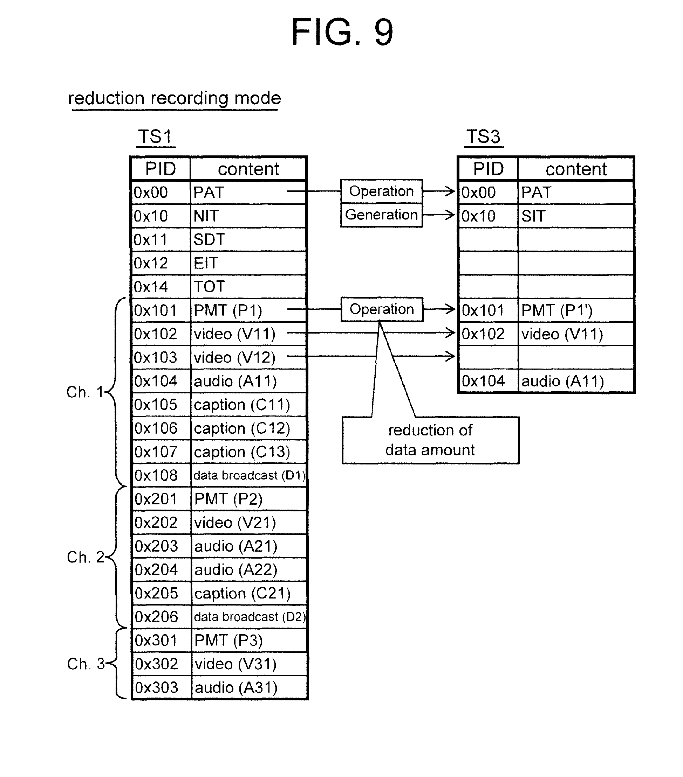

(4) Variation examples:
The information of one channel in the TS may include video TS packets having plural PIDs. In that case, as exemplary shown in Fig. 9, the partial transport stream TS3 can be generated by using the filtered TS packet group made by deleting the video transport packets (V11, V12) which have other identifier than a certain packet identifier from the TS packet group GP1 representing the information of one recording channel (Ch. 1) to leave only one video TS packet (V11), and then the partial transport stream TS3 can be recorded in the recording media M1.

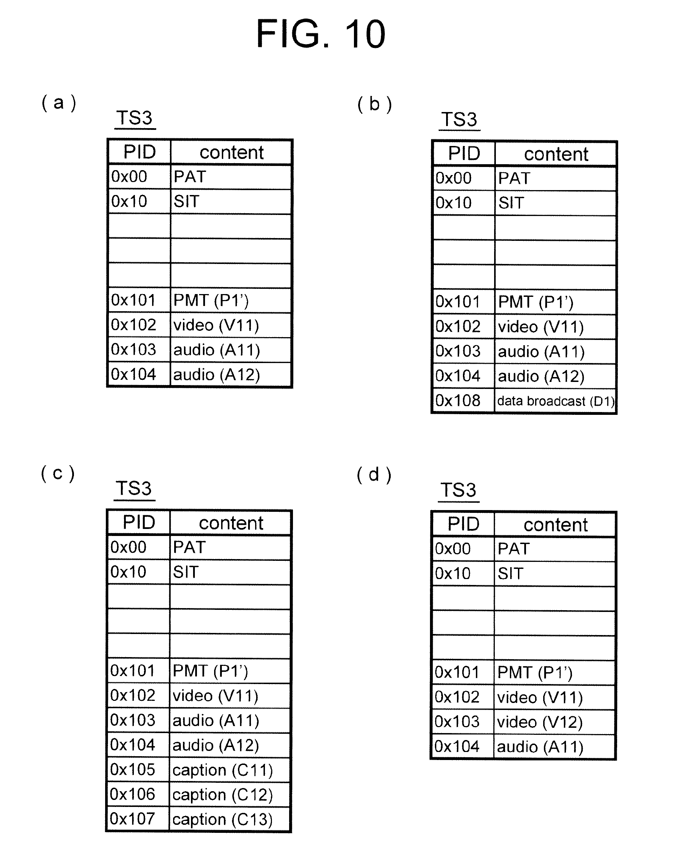

Fig. 10 (a) to (c) exemplary shows a configuration of the partial transport stream TS3 generated from the transport stream TS 1 shown in Fig. 4. As exemplary shown in Fig. 10 (a), the partial transport stream TS3 can be generated by using the filtered TS packet group made by deleting the caption TS packets and the data broadcast TS packets from the TS packet group GP1 representing the information of one recording channel (Ch. 1) to leave plural audio TS packets A11, A12, and then the partial transport stream TS3 can be recorded in the recording media M1.
As exemplary shown in Fig. 10 (b), the partial transport stream TS3 can be generated by using the filtered TS packet group made by deleting the caption TS packets from the TS packet group GP1 representing the information of one recording channel (Ch. 1) to leave the data broadcast TS packet D1, and then the partial transport stream TS3 can be recorded in the recording media M1.

As exemplary shown in Fig. 10 (c), the partial transport stream TS3 can be generated by using the filtered TS packet group made by deleting data broadcast TS packets from the TS packet group GP1 representing the information of one recording channel (Ch. 1) to leave the caption TS packets C11, C12, C13, and then the partial transport stream TS3 can be recorded in the recording media M I . The caption TS packets C11, C12, C 13 can be partly deleted.
Fig. 10 (d) exemplary shows a configuration of the partial transport stream TS3 generated from the transport stream TS1 shown in Fig. 9. As exemplary shown in Fig. 10 (d), the partial transport stream TS3 can be generated M1 by using the filtered TS packet group made by deleting the caption TS packets and the data broadcast TS packets from the TS packet group GP representing the information of one recording channel (Ch. 1) to leave plural video TS packets V11, V12, and then the partial transport stream TS3 can be recorded in the recording media.

As explained above, other embodiments of the present invention can provide convenient broadcast recording devices and broadcast recording method for making broadcast recording devices more convenient.

In addition, the above-described basic operation and effect can be obtained even with the apparatus, the method and so on having only the features set forth in the independent claims and having no features set forth in the dependent claims.

Note that, this invention is not limited to the above-mentioned embodiments. Although it is to those skilled in the art, the following are disclosed as the one embodiment of this invention.
- Mutually substitutable members, configurations, etc. disclosed in the embodiment can be used with their combination altered appropriately.
- Although not disclosed in the embodiment, members, configurations, etc. that belong to the known technology and can be substituted with the members, the configurations, etc. disclosed in the embodiment can be appropriately substituted or are used by altering their combination.
- Although not disclosed in the embodiment, members, configurations, etc. that those skilled in the art can consider as substitutions of the members, the configurations, etc. disclosed in the embodiment are substituted with the above mentioned appropriately or are used by altering its combination.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art. Such variations and alternate embodiments are contemplated.

It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.

In addition, reference to "first," "second," "third," and etc. members throughout the disclosure (and in particular, claims) is not used to show a serial or numerical limitation but instead is used to distinguish or identify the various members of the group.

## Claims

1. A broadcast recording device that generates a partial transport stream from a transport stream representing information of one or more channels as a transport packet group, **characterized by** comprising:
a reduction recording unit that generates the partial transport stream by using a filtered transport packet group made by deleting at least one of a caption transport packet and a data broadcast transport packet from the transport packet group representing the information of one recording channel selected from the one or more channels, and then records the generated partial transport stream in a recording media.

2. The broadcast recording device according to claim 1, further comprising:
a mode selection unit that receives a selecting result of a recording mode including a normal recording mode in which a target transport packet is not deleted and a reduction recording mode in which the target transport packet is deleted; and
a normal recording unit that generates the partial transport stream by using the transport packet group representing the information of one recording channel selected from the one ore more channels when the normal recording mode is selected, and then records the generated partial transport stream in the recording media, wherein:
the target transport packet represents at least one of the caption transport packet and the data broadcast transport packet, and
the reduction recording unit generates the partial transport stream by using the filtered transport packet group when the reduction recording mode is selected, and then records the generated partial transport stream in the recording media.

3. The broadcast recording device according to claim 1 or 2, wherein:
when plural audio transport packets which have different packet identifiers are included in the transport packet group representing the information of the recording channel, the reduction recording unit generates the partial transport stream by using the filtered transport packet group made by deleting the audio transport packets which have other packet identifiers than a certain packet identifier, and then records the generated partial transport stream in the recording media.

4. The broadcast recording device according to any one of claims 1 to 3, wherein:
when plural video transport packets which have different packet identifiers are included in the transport packet group representing the information of the recording channel, the reduction recording unit generates the partial transport stream by using the filtered transport packet group made by deleting the video transport packets which have other packet identifiers than a certain packet identifier, and then records the generated partial transport stream in the recording media.

5. The broadcast recording device according to claim 1, further comprising:
a mode selection unit that displays a recording mode selection screen to receive a selecting result of the recording mode including a normal recording mode in which both of the caption transport packet and the data broadcast transport packet are not deleted, and a reduction recording mode in which both of the caption transport packet and the data broadcast transport packet are deleted and further video transport packets and audio transport packets which have other packet identifiers than a certain packet identifier are deleted to leave only one video transport packet and one audio transport packet; and
a normal recording unit that generates the partial transport stream by using the transport packet group representing the information of one recording channel selected from the one or more channels when the normal recording mode is selected, and then records the generated partial transport stream in the recording media, wherein
the reduction recording unit generates the partial transport stream by using the filtered transport packet group made by deleting both of the caption transport packet and the data broadcast transport packet from the transport packet group representing the information of the recording channel selected from the one or more channels, and further deleting the video transport packets and the audio transport packets which have other packet identifiers than a certain packet identifier to leave only one video transport packet and one audio packet when the reduction recording mode is selected, and then records the generated partial transport stream in the recording media.

6. A broadcast recording method that generates a partial transport stream from a transport stream representing information of one or more channels as a transport packet group, **characterized by** comprising:
generating the partial transport stream by using a filtered transport packet group made by deleting at least one of a caption transport packet and a data broadcast transport packet from the transport packet group representing information of one recording channel selected from the one or more channels; and
recording the generated partial transport stream in a recording media.
